# EUROPEAN PATENT APPLICATION

(11) **EP 2 942 915 A1**
(43) Date of publication of application: **11.11.2015**
(21) Application number: 14167098.4
(22) Date of filing: 06.05.2014
(51) Int. Cl.: H04L 12/805

(54) **Method and apparatus for processing and routing ip data packets in a packet switched network**

(71) Applicant: Nokia Solutions and Networks Oy, 02610 Espoo (FI)
(72) Inventor: Markunmaki, Jouni Tapani, 36110 Ruutana (FI)
(74) Representative: Borgström, Markus

(57) **Abstract**

A method and apparatus for processing and routing IP data packets in a packet switched network is provided, the method comprising the steps of: receiving an IP data packet (S1); determining whether the size of said IP data packet is greater than a maximum transmissible packet size (S2); determining whether a fragmentation avoidance information is set in the IP header of the IP data packet indicating to avoid fragmentation of the IP data packet (S3), in case said IP data packet is greater the maximum transmissible packet size; determining whether an ignore information is set in the IP header of the IP data packet indicating to ignore said fragmentation avoidance information (S4), in case said fragmentation avoidance information is set in the IP header of the IP data packet; and transmitting said IP data packet (S7), in case said ignore information is set in the IP header of the IP data packet.

## Description

The present invention relates generally to a method and apparatus for processing and routing IP data packets in a packet switched network, and more particularly to a method and apparatus for automatic IP interface MTU adjustment.

The Internet Protocol (IP) is the communications protocol that provides an identification and location system for computers on networks and routes traffic across the Internet.

A packet switched network may consist of a plurality of network nodes that may forward IP data packets from a source node to a destination node. The nodes may be realized by computers and/or servers. The data travel around the network or between different networks in an IP data packet structure. The IP data packets have two portions, i.e. a body, where the payload data is contained, and a header. The header contains different sections, according to which protocols are involved for transporting the data. The most widespread protocol for transporting data across the Internet is the Internet Protocol (IP).

In the following a node shall define a device that implements the Internet Protocol (IP). A router shall define a node that forwards IP data packets not explicitly addressed to itself. A host shall define any node that is not a router. An upper layer shall define a protocol layer immediately above IP. Examples are transport protocols such as TCP (Transmission Control Protocol) and UDP (User Datagram Protocol), control protocols such as ICMP (Internet Control Message Protocol), routing protocols such as OSPF (Open Shortest Path First), and internet or lower-layer protocols being "tunneled" over (i.e., encapsulated in) IP such as IPX (Internetwork Packet Exchange), AppleTalk®, or IP itself. A link shall define a communication facility or medium over which nodes can communicate at the link layer, i.e., the layer immediately below IP. Examples are Ethernets, PPP links (Point-to-Point Protocol), X.25, Frame Relay, or ATM networks (Asynchronous Transfer Mode), and internet (or higher) layer "tunnels", such as tunnels over IPv4 or IPv6 itself. Neighbours shall define nodes attached to the same link. An interface shall define a node's attachment to a link. An address shall define an IP-layer identifier for an IP interface or a set of IP interfaces. A packet shall define an IP header plus payload, and a link MTU shall define the maximum transmission unit, i.e., maximum packet size in octets, that can be conveyed over a link or IP interface, respectively.

The invention is targeted to a network element or node that may contain host processing, routing and forwarding functions. A conventional system has already automatic interface MTU adjustment based on the ICMP (Internet Control Message Protocol) or big packet propagation path MTU learning mechanisms. In this connection a network element or node is assumed to be able to automatically decrease the value of the actual network IP interface MTU based on the learned path MTU value to optimize the end-to-end IP fragmentation to take place only once within the path from source to destination. The path MTU defines the maximum packet size which might be transmitted from source node to destination node without being subject to packet fragmentation.

In the existing systems there exists already path MTU discovery (RFC 1063) for discovering a respective path MTU. Path MTU discovery defines a method for dynamically detecting the MTU (Maximum Transmission Unit) for a specific path in the network, thus reducing the information overhead and avoiding fragmentation of data packets.

For the conventional telecommunication system that contains automatic interface MTU adjustment based on the path MTU discovery a method is required to poll if the path MTU has increased from the previously learned path MTU size. The local IP interface MTU value is followed at IP packet fragmentation and according to the standard TCP/IP stack implementation system does not forward bigger than MTU IP packets via the local interface in case e.g. DF bit (Don't Fragment) is set in the IP header for the IP packet. In such target system a mechanism to inject bigger than local interface MTU IP packet to the link is required.

Traditional path MTU implementation limits the packet size at host processing within the layer above the Internet Protocol (packetization layer) or directly creates the IP fragments producing lower than interface MTU IP packets. In a system where the IP payload size cannot be limited or where the IP fragmentation cannot be performed at host processing side due to too big performance penalty the automatic network interface MTU configuration can be applied. Such mechanism requires also an extension to discover the increased path MTU. Therefore, up to now the end-to-end IP fragmentation optimization has to be handled manually which is an effort consuming task in a complex transport network.

In detail, the interface MTU values are typically managed manually in current systems. The automated network interface MTU adjustment may only be implemented to decrease the actual interface MTU value against which the IP packets sent out from the host node are being fragmented.

Moreover, the path MTU discovery mechanisms exist to provide control for the packet size above the IP layer (packetization layer). Also the IP fragmentation producing smaller than interface MTU IP packets exists for the host processing implementations.

However, the existing methods do not properly support the cases where the IP packet size or the payload size cannot be directly controlled at a higher layer at the host processing. Currently, in order to optimize the IP fragmentation in the network, the only way is to manually maintain the proper MTU settings "end-to-end" within the network.

In an automated interface MTU configuration where the actual interface MTU value is set according to the lowest MTU the interface MTU can be only decreased in current implementations since bigger than MTU IP packets cannot be injected to the link with e.g. IP header DF bit set to value "1" (enabled).

It is therefore an object of the present invention to provide a method and an apparatus for processing and routing IP data packets in a packet switched network which enables an improved automatic interface MTU adjustment.

According to the present invention this object is achieved with respect to the method by the measures of claim 1 and with respect to the apparatus by the features of claim 9.

In accordance with a preferred embodiment of the present invention a method of processing and routing IP data packets in a packet switched network is provided, the method comprising the steps of: receiving an IP data packet, determining whether the size of said IP data packet is greater than a maximum transmissible packet size, determining whether a fragmentation avoidance information is set in the IP header of the IP data packet indicating to avoid fragmentation of the IP data packet, in case said IP data packet is greater the maximum transmissible packet size, determining whether an ignore information is set in the IP header of the IP data packet indicating to ignore said fragmentation avoidance information, in case said fragmentation avoidance information is set in the IP header of the IP data packet, and transmitting said IP data packet, in case said ignore information is set in the IP header of the IP data packet. Thus, an automatic interface MTU adjustment is realized, wherein the local interface MTU can be decreased and increased automatically resulting in reduced network operator tasks and optimized fragmentation.

Moreover, the ignore information may be reset in the IP header of the IP data packet before transmitting said IP data packet. This enables to increase the local interface MTU also for e.g. neighboring nodes in the path.

In addition, the IP data packet may be discarded, in case said ignore information is determined to be not set in the IP header of the IP data packet.

Moreover, the IP data packet may be fragmented and transmitted, in case said fragmentation avoidance information is determined to be not set in the IP header of the IP data packet.

The IP data packet may be transmitted without fragmentation, in case the size of said IP data packet is determined to be smaller or equal to the maximum transmissible packet size.

In particular, the ignore information may be set in the Type of Service field of an IPv4 header or in the Traffic Class field of an IPv6 header of the IP data packet, and in particular in the Explicit Congestion Notification (ECN) bits.

Alternatively, the ignore information may be set in the Flow Label field of an IPv6 header of the IP data packet, and in particular in the upper most bit of the Flow Label field.

Finally the ignore information may be set temporarily, in particular periodically, and/or packet specifically in the IP header of the IP data packet.

According to a further preferred embodiment of the present invention an apparatus for processing and routing IP data packets in a packet switched network is provided, comprising: receiving means for receiving an IP data packet, first determining means for determining whether the size of said IP data packet is greater than a maximum transmissible packet size, second determining means for determining whether a fragmentation avoidance information is set in the IP header of the IP data packet indicating to avoid fragmentation of the IP data packet, in case said IP data packet is greater the maximum transmissible packet size, third determining means for determining whether an ignore information is set in the IP header of the IP data packet indicating to ignore said fragmentation avoidance information, in case said fragmentation avoidance information is set in the IP header of the IP data packet, and transmitting means for transmitting said IP data packet, in case said ignore information is set in the IP header of the IP data packet.

In the dependent claims further advantageous embodiments of the present invention are shown.

For a more complete understanding of the present invention, and the advantages thereof, reference is now made to the following description taken in conjunction with the accompanying drawings, in which:
Figure 1 shows a simplified flowchart of the method according to an embodiment of the present invention;
Figure 2 shows the header structure according to IPv4;
Figure 3 shows the header structure according to IPv6;
Figure 4 shows a WCDMA RAN system with automatic MTU adjustment interface according to an embodiment of the present invention;
Figure 5 shows a LTE system with automatic MTU adjustment interface according to a further embodiment of the present invention;
Figure 6 shows a generic transport network structure with automatic MTU adjustment interface according to a further embodiment of the present invention; and
Figure 7 shows a system having a local interface with automatic MTU adjustment according to a further embodiment of the present invention.

According to the present invention a network system that contains automatic interface MTU adjustment based on the path MTU discovery may be realized which may poll if the path MTU has increased from the previously learned path MTU size. The local interface MTU value is followed at IP packet fragmentation and according to the standard TCP/IP stack implementation the modified system may now forward bigger than MTU IP packet via the local interface even in case the DF bit (Don't Fragment) in the IP header is set for the IP packet. Thus, in such target system a mechanism to inject bigger than local interface MTU IP packet to the link is realized. In contrast to the conventional TCP/IP stack implementation the present invention presents a realization wherein the local interface MTU can not only be decreased automatically but can also be increased automatically.

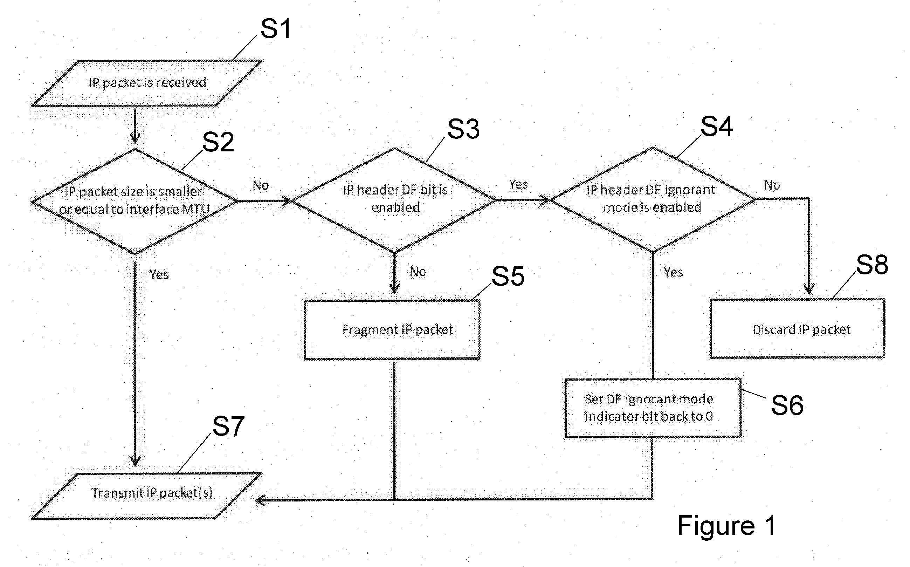

Figure 1 shows a simplified flowchart of the method according to an embodiment of the present invention wherein the reference signs S1 to S8 describe the respective method steps. In detail, in step S1 an IP data packet may be received in e.g. a network element or node of a packet switched network. In a step S2 it can be determined whether a size of the received IP data packet is smaller or equal to the interface MTU (Maximum Transmit Unit) of the respective network node. In case the size of the IP data packet is greater than the maximum transmissible packet size, i.e. MTU, of the local interface the method advances to step S3, wherein it may be determined whether an fragmentation avoidance information, such as a DF bit (Don't Fragment), is enabled or set in the IP header of the received data packet.

In case the size of the IP data packet is determined in step S2 to be smaller or equal to the interface MTU of the network node no modifications may be made to the IP data packet and the method advances to step S7, wherein the received IP data packet is transmitted to the next node (neighbour) without any changes.

In case the fragmentation avoidance information in the IP header, e.g. the DF bit, which indicates that fragmentation of the received IP data packet is to be avoided or forbidden, is determined in step S3 to be set or enabled the method advances to step S4, wherein it may be determined whether an ignore information is set in the IP header of the IP data packet.

In case the fragmentation avoidance information is determined in the IP header to be not set or enabled the method may advance to step S5, wherein a fragmentation procedure is realized for the IP data packet. After the fragmentation procedure to the IP data packet the respective data packets may be transmitted in step S7 to a neighbouring node.

In step S4 it may be determined whether an ignore information is set in the IP header of the IP data packet. This ignore information indicates to ignore the detected fragmentation avoidance information, i.e. the DF bit, and to bring the network node into the so called "DF ignorant mode" which allows the transmission of the IP data packet even if its size is greater than the interface MTU and even if the fragmentation avoidance information, e.g. DF bit, is enabled. The ignore information may be located in the Type of Service field of an IPv4 header or in the Traffic Class field of an IPv6 header or in the Flow Label field of an IPv6 header as will be described later in more detail.

In case the ignore information in the IP header is determined in step S4 to be not set or enabled the method advances to step S8, where the received IP data packet is discarded.

However, in case the ignore information in the IP header is determined in step S4 to be set or enabled the method may advance to step S6, wherein the ignore information in the IP header may be reset or set back to 0 and the data packet is forwarded to the next network node in step S7.

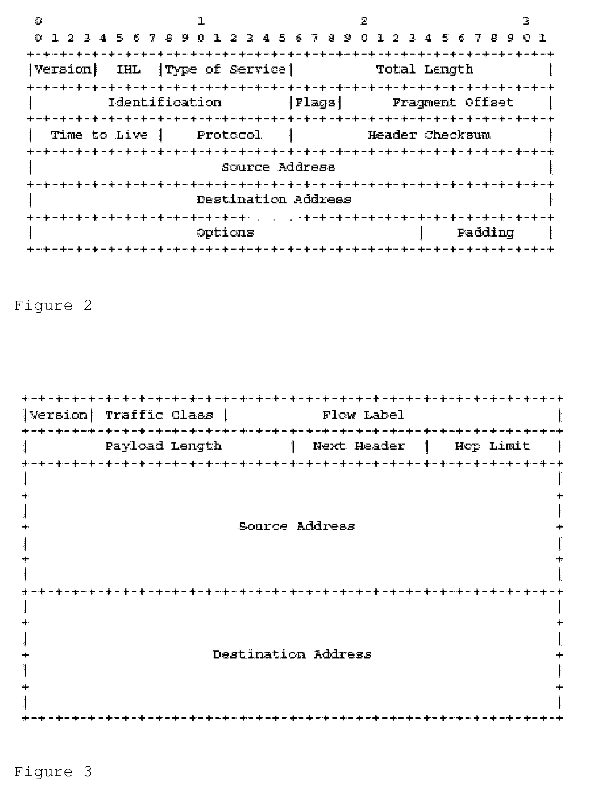

Figure 2 shows the header structure according to IPv4 networking (RFC791). IPv4 is the fourth version in the development of the Internet Protocol and routes most traffic in the Internet. IPv4 is a connectionless protocol and operates on a best effort delivery model.

The header structure according to Figure 2, i.e. IPv4, includes a Version field indicating the version number of the internet header. An IHL field has 4 bits and defines the Internet Header Length, i.e. the length of the internet header in 32 bit words, and thus points to the beginning of the data (payload). A Type of Service field provides an indication of the abstract parameters of the quality of service desired. These parameters are to be used to guide the selection of the actual service parameters when transmitting a datagram through a particular network and may be used by the present invention to realize the Don't Fragment "ignore information". A Total Length field defines the length of the datagram, measured in octets, including internet header and data. An Identification field defines an identifying value assigned by the sender to aid in assembling the fragments of a datagram. A Flags field may include various Control Flags for fragmentation. A Fragment Offset field indicates where in the datagram this fragment belongs. A Time to Live field indicates the maximum time the datagram is allowed to remain in the internet system. If this field contains the value zero, then the datagram must be destroyed. This field is always modified in internet header processing. The intention is to cause undeliverable datagrams to be discarded, and to bind the maximum datagram lifetime. A Protocol field indicates the next level protocol used in the data portion of the internet datagram. A Header Checksum field is a checksum on the header only. Finally the IPv4 header includes a 32-bit source address defining the source node and a 32-bit destination address defining the destination node for the data packet.

Figure 3 shows the header structure according to IPv6 networking (RFC2460). IPv6 is the latest version in the development of the Internet Protocol and is intended to replace IPv4 which still carries the majority of Internet traffic in 2014.

The header structure according to Figure 3, i.e. IPv6, includes also a Version field defining the version number, which is 6. A Traffic Class field is comparable with the Type of Service field in the IPv4 header and allows the prioritization of the data packet by the source node. In particular, this Traffic Class field may be used by the present invention to realize the Don't Fragment "ignore information" indicating that DF ignorant mode is enabled. A field Flow Label typically used by a source node to label sequences of packets for which it requests special handling by the IPv6 routers, such as non-default quality of service or "real-time" service. However, according to the present invention this Flow Label field may also be used to carry the Don't Fragment "ignore information" indicating that the DF ignorant mode is enabled. Furthermore, a Payload Length field defines the Length of the IPv6 payload, i.e. the rest of the packet following this IPv6 header, in octets. A Next Header field defines a selector identifying the type of header immediately following the current IPv6 header. A Hop Limit field includes an unsigned integer which is decremented by 1 by each network node that forwards the packet. The packet is discarded if the value of the Hop Limit is decremented to zero. Finally the IPv6 header includes a 128-bit Source Address field defining the address of the originator of the packet and a 128-bit Destination Address field defining the address of the intended recipient of the data packet.

In the following the present invention will be described on the basis of an IP version 4 (i.e. IPv4) or IP version 6 (i.e. IPv6) data packet. Path MTU discovery with the IPv4 may be based on sending a packet with IP header DF bit (IPv4 RFC 791, "Don't Fragment") set to enabled (bit value 1). The DF bit is located in the second bit (bit 1) of the Flags field of the IPv4 header. (In contrast with IPv6 only the host nodes should perform the IP fragmentation thus the fragmentation is not allowed within the intermediate nodes forwarding the packets.) According to the definition in case the DF bit is set, bigger than interface MTU IP data packets cannot be send out from the node of the system containing a standard TCP/IP stack implementation.

Therefore this invention introduces a mechanism to temporarily, and packet specifically, allow to send out a bigger than local interface MTU IP data packet with e.g. DF bit to be set or enabled. Still, even with the enhancement proposed within the invention, the implementation should take care not to inject bigger than physical layer maximum size frames size to the link.

The mechanism to allow the TCP/IP stack to inject an IP data packet being greater or bigger than interface MTU to the link with e.g. DF bit set to value "1" is based on the IP header fields that are currently unused by the target application area. Also a separate specific socket option can be applied to send IP data packets at an e.g. DF bit ignorant mode. The IP header unused bit values may be applied for indicating which packets are to be send out in the local MTU ignorant mode.

The special handling for the IPv4 IP data packet may be indicated to the TCP/IP stack with IPv4 ToS field (Type of service, RFC 791) or IPv6 traffic class field (RFC 2460) two lower bits being the Explicit Congestion Notification (ECN) bits. Here it may be assumed that the DiffServ (RFC 2474) and the ECN (RFC 3168) usage for the IPv4 Type of Service and IPv6 Traffic Class fields is like it is the case within the WCDMA RAN (Wideband Code Division Multiple Access Radio Access Network) and E-UTRAN (Evolved UTRAN (Universal Terrestrial Radio Access Network) systems.

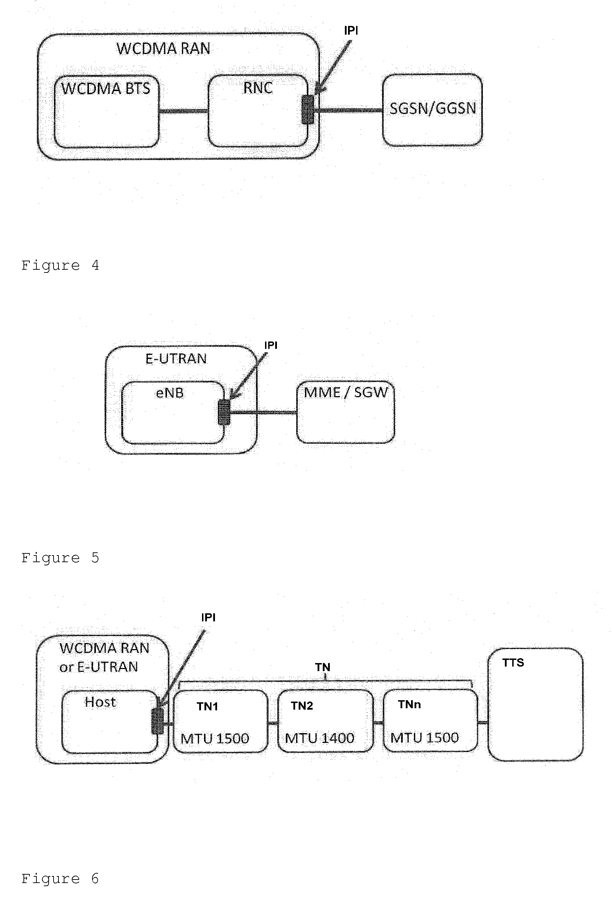

Figure 4 shows a simplified block diagram of a WCDMA (Wideband Code Division Multiple Access) RAN (Radio Access Network (25.401) and Figure 5 shows a simplified block diagram of an E-UTRAN (Evolved UTRAN (Universal Terrestrial Radio Access Network (3GPP 36.300)) where the present invention may be implemented. In detail, the present invention may be implemented in the IP-Interface IPI of the RNC (Radio Network Controller) being linked to the SGSN (Serving GPRS Support Node) or GGSN (Gateway GPRS Support Node), while the RNC is connected to the WCDMA Base Station (BTS) of the Radio Access Network (see Figure 4). Alternatively, the present invention may be implemented in the local IP Interface IPI of the E-UTRAN node B (eNB) which is linked to the neighbouring node such as a Mobility Management Entity (MME) or a Serving Gateway (SGW), as shown in Figure 5.

Since the two lower bits of the Type of Service and Traffic Class fields are not otherwise used in the UTRAN or E-UTRAN network elements, they can be applied for the implementation specific handling. The added logic for the packet sending process is presented at Figure 1, where the "as per packet added logics" can be detected from the additional bit level information within the IP header or via the socket options usage. Once the e.g. ECN bits (either one bit or both bits) are set to value 1 the TCP/IP stack will let the IP data packet to pass through even though the DF bit is set to "enabled". The ECN bits may be reset or set back to zero within the IP header before injecting the data packet to the link via the external interface IPI and the DF bit may be kept in the original setting.

Figure 6 shows a simplified block diagram of a WCDMA (Wideband Code Division Multiple Acces) RAN (Radio Access Network (25.401) or E-UTRAN (Evolved UTRAN (Universal Terrestrial Radio Access Network (3GPP 36.300) host configuration with variating supported MTU's, where the present invention may be implemented. In detail, the present invention may be implemented in the IP-Interface IPI of the host, while the Transport Network TN may consist of a variety of Transport Networks TN1, TN2 ... TNn having different MTU values, i.e. 1500 for TN1, 1400 for TN2, ... 1500 for TNn. The Transport Network TN is linked to the Traffic Terminating System TTS, where an IP frame reassembly may be realized.

The algorithms to perform the path MTU discovery and to adjust the path MTU value may follow the principles for the existing implementations. The ideas for the path MTU discovery are covered for example within the RFC 1191 (IPv4) and RFC 1981 (IPv6).

The special handling for the IPv6 IP data packet can be also indicated to the TCP/IP stack with IPv6 Flow label field upper most bit (see Figure 3). The Flow Label field is currently not used within the UTRAN or E-UTRAN systems but even if used later on the upper most bit usage still leaves room for 19 bits to be applied as a Flow Label field. Once the upper most bit in the IPv6 Flow Label field may be set to value "1" the TCP/IP stack will let the IP packet to pass through even if e.g. the IP header DF bit is set to be enabled. The Flow Label field upper most bit may be reset or set back to "0" within the IP header before injecting the IP data packet to the link via the external interface IPI.

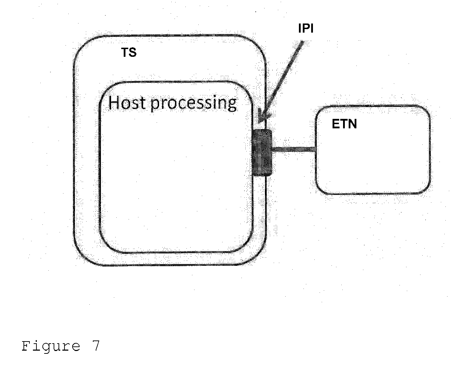

Figure 7 shows a block diagram according to further embodiment of the present invention wherein the automatic MTU adjustment is realized in the external IP Interface IPI of a Target System TS which realizes the host processing. The external IP Interface IPI may be linked to an external Transport Network ETN.

The next hop or next network node along the path having a MTU value that would require IP fragmentation may send an ICMP message (Internet Control Message Protocol) back to the originating host based e.g. on the RFC 1191 and RFC 1981 principles. Thus the network system is able to learn whether the path MTU has increased from earlier learned path MTU value with searching the next bigger supported path MTU in e.g. an iterative manner.

Conceptually, even though the present invention requires a TCP/IP stack to behave against the standard well defined functionality, the outcome of the use case is the similar with having the MTU values configured asymmetrically in between the links. So temporarily, looking the system behaviour externally, the system may be sending an IP data packet as it would have a bigger or greater MTU configured. This may lead to a typical case in the transport networks and this is the very reason why the path MTU mechanisms are required in a first place. With allowing a host containing system to temporarily inject an IP data packet being larger than the interface MTU to the link, the system is able to test if the previously learned path MTU has been increased in the transport network.

Thus, the implementation according to the present invention allows the automatic local interface MTU adjustment procedure to identify also the increased path MTU. Otherwise the interface MTU setting remains manual and operator cannot take advantage from the easier overall system planning and maintenance load.

The activation of the path MTU discovery and the automatic interface MTU adjustment in the network element or node may be done by a network operator. Along with the path MTU discovery process the network element or node may periodically send bigger or greater data packets than network interface MTU frame with utilizing the DF ignorant mode.

Moreover, it will be understood that the present method of processing and routing IP data packets in a packet switched network can be implemented by computer program instructions. These computer program instructions may be loaded onto a computer or another programmable apparatus to produce a machine, such that the instructions which are executed on the computer or other programmable apparatus create means for implementing the function specified in the method steps. These computer program instructions may also be stored in a computer-readable memory, e.g. DVD, CD, diskette, that can direct a computer or other programmable apparatus to function in a particular manner. Moreover, these computer program instructions may be downloaded in e.g. a telecommunications network to cause operational steps to be performed on the computer or other programmable apparatus to produce a computer implemented process such that the instructions which execute on the computer or other programmable apparatus provide steps for implementing the functions specified in the method steps.

Although embodiments of the present invention and their advantages have been described in detail, it should be understood that various changes, substitutions and alterations can be made therein without departing from the spirit and scope of the invention as defined by the appended claims. For example, it will be readily understood by those skilled in the art that many of the features, functions, processes and methods described herein may be varied while remaining within the scope of the present invention. Moreover, the scope of the present application is not intended to be limited to the particular embodiments of the system, process, manufacture, method or steps described in the present invention. As one of ordinary skill in the art will readily appreciate from the disclosure of the present invention systems, processes, manufacture, methods or steps presently existing or to be developed later, that perform substantially the same function or achieve substantially the same result as the corresponding embodiments described herein may be utilized according to the present invention. Accordingly, the appended claims are intended to include within their scope such methods, apparatuses and computer program products.

### Reference List

- S1 to S8: method steps
- IPI: IP Interface
- WCDMA RAN: Wideband Code Division Multiplex Access Radio Access Network
- WCDMA BTS: Wideband Code Division Multiplex Access Base Station
- RNC: Radio Network Controller
- SGSN: Serving GPRS Support Node
- GGSN: Gateway GPRS Support Node
- E-UTRAN: Evolved UTRAN
- eNB: E-UTRAN node B
- BTS: Base station
- MME: Mobility Management Entity
- SGW: Serving Gateway
- TN: Transport Network
- TTS: Traffic Terminating System
- ETN: External Transport Network
- TS: Target System

## Claims

1. A method of processing and routing IP data packets in a packet switched network, the method comprising the steps of:
receiving an IP data packet (S1) ;
determining whether the size of said IP data packet is greater than a maximum transmissible packet size (S2);
determining whether a fragmentation avoidance information is set in the IP header of the IP data packet indicating to avoid fragmentation of the IP data packet (S3), in case said IP data packet is greater the maximum transmissible packet size;
determining whether an ignore information is set in the IP header of the IP data packet indicating to ignore said fragmentation avoidance information (S4), in case said fragmentation avoidance information is set in the IP header of the IP data packet; and
transmitting said IP data packet (S7), in case said ignore information is set in the IP header of the IP data packet.

2. The method of claim 1, wherein said ignore information is reset (S6) in the IP header of the IP data packet before transmitting said IP data packet.

3. The method of claim 1 or 2, wherein said IP data packet is discarded (S8), in case said ignore information is determined to be not set in the IP header of the IP data packet.

4. The method of any of claims 1 to 3, wherein said IP data packet is fragmented (S5) and transmitted (S7), in case said fragmentation avoidance information is determined to be not set in the IP header of the IP data packet.

5. The method of any of claims 1 to 4, wherein said IP data packet is transmitted (S7) without fragmentation, in case the size of said IP data packet is determined to be smaller or equal to the maximum transmissible packet size.

6. The method of any of claims 1 to 5, wherein said ignore information is set in the Type of Service field of an IPv4 header or in the Traffic Class field of an IPv6 header of the IP data packet, and in particular in the Explicit Congestion Notification (ECN) bits.

7. The method of any of claims 1 to 5, wherein said ignore information is set in the Flow Label field of an IPv6 header of the IP data packet, and in particular in the upper most bit.

8. The method of any of claims 1 to 7, wherein said ignore information is set temporarily, in particular periodically, and/or packet specifically in the IP header of the IP data packet.

9. An apparatus for processing and routing IP data packets in a packet switched network, comprising:
receiving means for receiving an IP data packet;
first determining means for determining whether the size of said IP data packet is greater than a maximum transmissible packet size;
second determining means for determining whether a fragmentation avoidance information is set in the IP header of the IP data packet indicating to avoid fragmentation of the IP data packet, in case said IP data packet is greater the maximum transmissible packet size;
third determining means for determining whether an ignore information is set in the IP header of the IP data packet indicating to ignore said fragmentation avoidance information, in case said fragmentation avoidance information is set in the IP header of the IP data packet; and
transmitting means for transmitting said IP data packet, in case said ignore information is set in the IP header of the IP data packet.

10. The apparatus of claim 9, further comprising a reset means for resetting said ignore information in the IP header of the IP data packet before transmitting said IP data packet by the transmitting means.

11. The apparatus of claim 9 or 10, further comprising a discard means for discarding said IP data packet, in case said third determining means determines said ignore information to be not set in the IP header of the IP data packet.

12. The apparatus of any of claims 9 to 11, further comprising a fragmentation means for fragmenting said IP data packet before transmitting it, in case said second determining means determines said fragmentation avoidance information to be not set in the IP header of the IP data packet.

13. The apparatus of any of claims 9 to 12, further comprising an enablement means for setting said ignore information in the Type of Service field of an IPv4 header or in the Traffic Class field of an IPv6 header of the IP data packet, and in particular in the Explicit Congestion Notification (ECN) bits.

14. The apparatus of any of claims 9 to 12, further comprising an enablement means for setting said ignore information in the Flow Label field of an IPv6 header of the IP data packet, and in particular in the upper most bit of the Flow Label field.

15. The apparatus of any of claims 13 or 14, wherein said enablement means set said ignore information temporarily, in particular periodically, and/or packet specifically in the IP header of the IP data packet.

16. A computer program product comprising at least one computer readable storage medium having computer-readable program code portions stored therein for performing the method steps according to any of claims 1 to 8.
